# EUROPÄISCHE PATENTSCHRIFT

(11) **EP 3 371 501 B1**
(45) Veröffentlichungstag und Bekanntmachung des Hinweises auf die Patenterteilung: **07.06.2023**
(21) Anmeldenummer: 16798392.3
(22) Anmeldetag: 03.11.2016
(51) Int. Cl.: F16L 5/00, F16L 41/08, F16L 41/00, F16B 19/10, F16L 33/213, F24F 11/30, F24F 11/62

(54) **VERFAHREN ZUR HERSTELLUNG EINES SCHLAUCHANSCHLUSSES MIT DRUCKMESSPUNKT FÜR EINEN DRUCKSENSOR**
METHOD FOR PRODUCING A HOSE CONNECTOR WITH A PRESSURE GAUGE FOR A PRESSURE SENSOR
PROCÉDÉ DE PRODUCTION D'UN RACCORDEMENT DE TUYAU COMPRENANT UN POINT DE MESURE DE PRESSION POUR UN CAPTEUR DE PRESSION

(30) Priorität: 06.11.2015 DE 102015119086
(43) Veröffentlichungstag der Anmeldung: 12.09.2018
(73) Patentinhaber: ESTA Apparatebau GmbH & Co. KG, 89250 Senden (DE)
(72) Erfinder: DÖPPE, Matthias, 89129 Langenau (DE); KLINGLER, Andreas, 89555 Steinheim (DE); KOLB, Peter, 89297 Schießen (DE)
(74) Vertreter: Michalski Hüttermann & Partner Patentanwälte mbB
(86) Internationale Anmeldenummer: PCT/DE2016/100519
(87) Internationale Veröffentlichungsnummer: WO 2017/076394

(56) Entgegenhaltungen:
- DE-A1- 2 531 421
- DE-A1- 3 328 913
- DE-B3-102013 001 124
- US-A- 4 152 818
- US-A- 4 929 001

## Beschreibung

Die Erfindung betrifft ein Verfahren zur Herstellung eines Schlauchanschlusses mit Druckmesspunkt für einen Drucksensor durch eine geschlossene Wand.

Mit Hilfe eines elektrischen Antriebes und eines Ventilators wird bei industriellen Absauganlagen ein Volumenstrom erzeugt, der staubbeladene Luft transportiert. Mit Hilfe eines oder mehrerer Filterelemente wird anschließend die Luft gereinigt.

Um einen optimalen Betriebszustand der Anlage zu gewährleisten, muss der aktuelle Volumenstrom gemessen werden. Als praktisch und nahezu unabhängig von der Wahl des Antriebes hat sich als Messsystem der Druckmesspunkt mit Messnippel herausgestellt. Allerdings ist die Position des Messnippels auf Grund der Befestigungslöcher bei kommerziell erhältlichen Lösungen vorgegeben und nur mit erheblichem Mehraufwand nachträglich änderbar, z.B. durch Bohren neuer Befestigungslöcher oder durch Umsetzen des Nippels selbst. Zusätzlich muss noch gegebenenfalls ein neues Gewinde geschnitten werden. Wichtig ist die Position, da möglicherweise Verwirbelungen im Ausblasbereich des Ventilators die Messgenauigkeit beeinflussen können.

Die Herstellung von definierten Schlauchanschlüssen für Drucksensoren ist mit vielen zeitaufwändigen Schritten und mehreren Teilen verbunden.

Aus der DE 10 2013 001 124 B3 ist eine Schlauchanschlussanordnung bekannt, mit einer Blindnietmutter, die einen Setzkopf, einen Gewindeabschnitt mit einem Innengewinde und einen Verformungsbereich aufweist, und mit einem Schlauchstutzen, der einstückig mit der Blindnietmutter ausgebildet ist.

Aus der US 4 152 818 A ist ein Verfahren zur Herstellung eines Wärmetauschers bekannt, bei dem Rohre in einem Block mit Bohrungen für die darin eingesteckten Rohre vermittels verformten Nieten gegen die Wandungen der Bohrungen gepresst und damit in den Bohrungen gehalten werden.

Aufgabe der Erfindung ist es eine vereinfachte und rationelle Vorgehensweise für die Herstellung eines Schlauchanschlusses mit Druckmesspunkt für einen Drucksensor zur Verfügung zu stellen.

Diese Aufgabe wird durch ein Verfahren zur Herstellung eines Schlauchanschlusses für einen Drucksensor nach den Merkmalen des Anspruchs 1 gelöst.

Erfindungsgemäß sind die folgenden Verfahrensschritte vorgesehen:
- Herstellen einer Bohrung durch die Wand mit dem Durchmesser des Nietfortsatzes eines Blindniets mit Dorn,
- Durchstecken des Blindniets durch das Loch bis zum Anschlag des Nietkopfes an der Wand und Aufstecken eines Schlauchs mit einem Innendurchmesser, der dem Auendurchmesser des Nietfortsatzes entspricht, auf den Nietfortsatz des Blindniets auf der gegenüberliegen Seite der Wandung,
- Ziehen des Dorns des Blindniets.

Der neu gesetzte Druckmesspunkt bietet somit ein neues Befestigungsloch und Messnippel. Gleichzeitig wird die Befestigung für den Messschlauch einfach und mit ausreichender Langzeitstabilität im industriellen Einsatzbereich bereit gestellt. Ein besonderer Vorteil liegt darin, dass bereits vorhandenes Werkzeug zum Einsatz kommt und keine Neukonstruktionen oder Beschaffungen notwendig sind.

Eine Ausgestaltung des Verfahrens sieht vor, dass nach dem Ziehen des Dorns ein Durchstoßen des Abschlussteils des Dorns des Blindniets in Richtung des aufgesetzten Schlauchs erfolgt. Dieser Verfahrenschritt ist Vorteilhaft bei Versionen von Blindnieten, bei denen ein Abrissteil nach ziehen verbleibt.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:
- Fig. 1: eine schematische Darstellung eines nach dem erfindungsgemäßen Verfahren hergestellten Schlauchanschlusses,
- Fig. 2: eine Ansicht auf den Kopf des Blindniets im luftdurchströmten Bereich der Einströmdüse,
- Fig. 3 bis 8: die einzelnen Verfahrensschritte, und
- Fig. 9: eine schematische Darstellung eines nach dem erfindungsgemäßen Verfahren hergestellten Schlauchanschlusses mit Druckmesspunkt im laufenden Betrieb.

Die in den Figuren gleichen Bezugsziffern bezeichnen gleiche oder gleich wirkende Elemente.

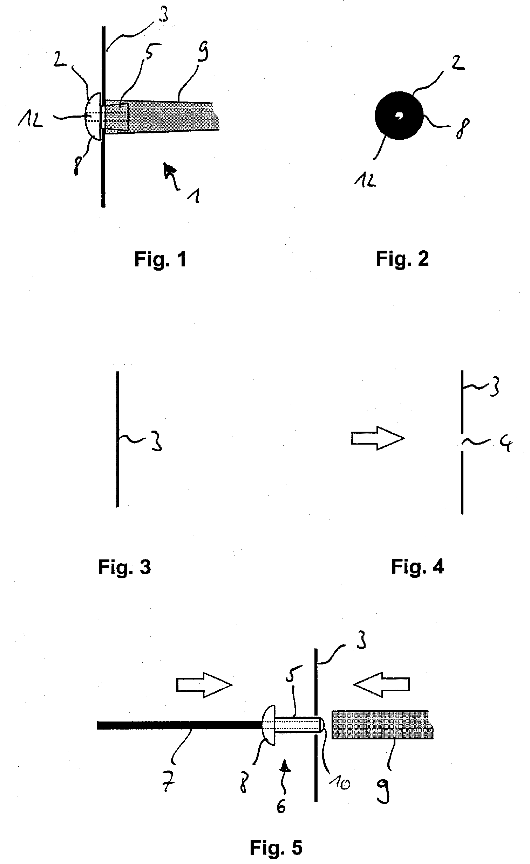

In Fig. 1 ist eine schematische Darstellung eines nach dem erfindungsgemäßen Verfahren hergestellten Schlauchanschlusses 1 in der Wandung 3 der Einströmdüse gezeigt. Fig. 2 zeigt schematisch die Draufsicht auf den Nietkopf 8. Die Anordnung bildet den Druckmesspunkt.

Der durch das Ziehen des Dorns des Blindniets verdickte Bereich des Nietfortsatzes 5 klemmt den zuvor aufgesteckten Bereich des Schlauchs 9 sicher und fest.

Der Nietkopf 8 des Blindniets befindet sich im luftdurchströmten Bereich der Einströmdüse. Der Luftkanal 12 durch den Blindnietkopf bildet eine Verbindung hin zum Schlauch 9. An diesen kann der Drucksensor angeschlossenen werden (nicht dargestellt).

Die Fig. 3 bis 8 zeigen das erfindungsgemäße Verfahren in Einzelschritten.

Fig. 3 zeigt die für den Sensor/Schlauchanschluss zu durchdringende Wand 3.

In Fig. 4 ist durch den Pfeil das Herstellen eines Lochs 4 durch die Wand 3 mit dem Durchmesser des Nietfortsatzes 5 eines Blindniets 6 mit Dorn 7 verdeutlicht.

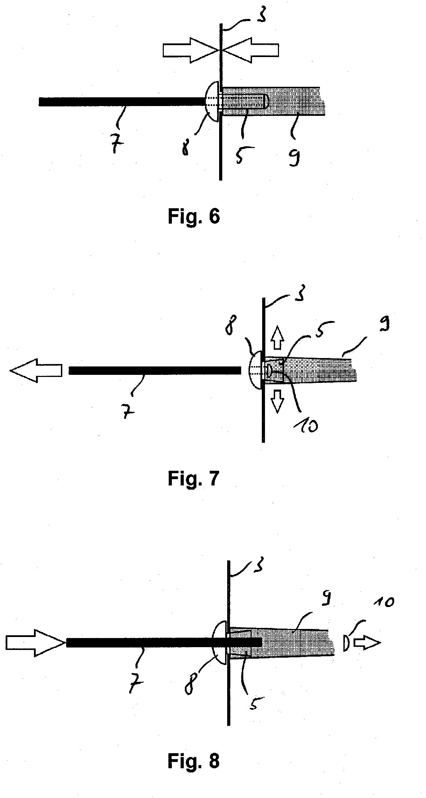

Fig. 5 zeigt das Durchstecken des Blindniets 6 durch das Loch 4 bis zum Anschlag - siehe hierzu auch Fig. 6 - des Nietkopfes 8 an der Wand 3 und Aufstecken eines Schlauchs 9 mit einem Innendurchmesser der dem Außendurchmesser des Nietfortsatzes 5 entspricht auf den Nietfortsatz 5 des Blindniets 6 auf der gegenüberliegen Seite der Wandung 3.

Fig. 7 zeigt das Ziehen des Dorns 7 des Blindniets 6 in Pfeilrichtung unter Abriss des Abschlussteils 10 des Dorns 7. Das Ziehen kann mit einer normalen Blindnietzange erfolgen. Dabei erfolgt eine Ausdehnung des Nietfortsatzes 5 im Bereich des aufgesetzten Schlauches 9. Der Abschlussteil 10 des Blindniets kann gegebenenfalls nach Abriss des Dorns 7 zunächst im geweiteten Bereich des Niets verbleiben und muss in diesem anschließend entfernt werden.

Schließlich erfolgt nur noch, wie in Fig. 8 gezeigt, das Durchstoßen des Abschlussteils 10 des Dorns 7 des Blindniets 6 in Richtung des aufgesetzten Schlauchs 9. Hierzu kann z.B. auch der zuvor mit Hilfe der Nietzange abgerissene Dorn 7 zusammen mit leichten Hammerschlägen verwendet werden.

Nach Entnahme des Abschlussteils 10 aus dem Schlauch 9 ist die Schlauchverbindung durch die Wandung 3 der Einströmdüse für einen Drucksensor fertig gestellt. Nach Abschluss der Arbeiten bleibt der aerodynamisch hervorragend ausgebildete Nietkopf 8 im luftdurchströmten Bereich stehen. Der angebrachte Schlauch 9 hält ohne Kleber oder weitere Befestigungsmaßnahmen.

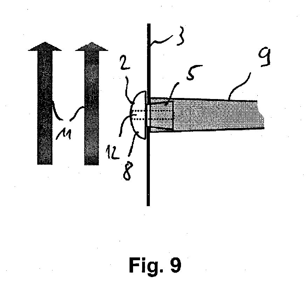

Fig. 9 zeigt den Schlauchanschlusses 1 mit Nietkopf 8 im laufenden Betrieb zur Messung eines Luftstroms 11 durch den Luftkanal 12 und den Schlauch 9.

### Bezugszeichenliste

- 1: Schlauchanschluss
- 2: Druckmesspunkt
- 3: Wand
- 4: Loch
- 5: Nietfortsatz
- 6: Blindniet
- 7: Dorn
- 8: Nietkopf
- 9: Schlauch
- 10: Abschlussteil
- 11: Luftströmung
- 12: Luftkanal

## Patentansprüche

1. Verfahren zur Herstellung eines Schlauchanschlusses (1) mit Druckmesspunkt zum Anschluss für einen Drucksensor durch eine geschlossene Wand (3),
**gekennzeichnet durch** die folgenden Verfahrensschritte:
- Herstellen eines Lochs (4) durch die Wand (3) mit dem Durchmesser des Nietfortsatzes (5) eines Blindniets (6) mit Dorn (7),
- Durchstecken des Blindniets (6) durch das Loch (4) bis zum Anschlag des Nietkopfes (8) an der Wand (3) und Aufstecken eines Schlauchs (9) mit einem Innendurchmesser, der dem Außendurchmesser des Nietfortsatzes (5) entspricht, auf den Nietfortsatz (5) des Blindniets (6) auf der gegenüberliegen Seite der Wandung (3),
- Ziehen des Dorns (7) des Blindniets (6).

2. Verfahren nach Anspruch 1,
**dadurch gekennzeichnet,**
**dass** nach dem Ziehen des Dorns (7) ein Durchstoßen des Abschlussteils (10) des Dorns (7) des Blindniets (6) in Richtung des aufgesetzten Schlauchs (9) erfolgt.

## Claims

1. Method for producing a hose connection (1) comprising a pressure measuring point for connecting a pressure sensor through a closed wall (3).
**characterized by** the following method steps:
forming a hole (4) through the wall (3) with the diameter of the rivet extension (5) of a blind rivet (6) comprising a mandrel (7);
inserting the blind rivet (6) through the hole (4) up to the stop of the rivet head (8) at the wall (3) and mounting a hose (9) with an inner diameter corresponding to the outer diameter of the rivet extension (5) on the rivet extension (5) of the blind rivet (6) at the opposite side of the wall (3); and
pulling the mandrel (7) of the blind rivet (6).

2. Method according to claim 1, **characterized in that**, after the mandrel (7) has been pulled, the end part (10) of the mandrel (7) of the blind rivet (6) is pushed through in the direction of the mounted hose (9).

## Revendications

1. Procédé de production d'un raccord de tuyau (1) comprenant un point de mesure de pression pour un raccordement d'un capteur de pression à travers une paroi fermée (3),
**caractérisé par** les étapes de procédé suivantes :
- réaliser un trou (4) ayant le diamètre du prolongement de rivet (5) d'un rivet aveugle (6) avec mandrin (7) à travers la paroi (3),
- passer le rivet aveugle (6) à travers le trou (4) jusqu'à la butée de la tête de rivet (8) sur la paroi (3) et emboîter un tuyau (9) d'un diamètre intérieur correspondant au diamètre extérieur du prolongement de rivet (5) sur le prolongement de rivet (5) du rivet aveugle (6) du côté opposé de la paroi (3),
- tirer le mandrin (7) du rivet aveugle (6).

2. Procédé selon la revendication 1, **caractérisé en ce que** après avoir tiré le mandrin (7), une perforation de la partie terminale (10) du mandrin (7) du rivet aveugle (6) est effectuée en direction du tuyau (9) emboîté.
